# EUROPÄISCHE PATENTSCHRIFT

(11) **EP 3 158 187 B1**
(45) Veröffentlichungstag und Bekanntmachung des Hinweises auf die Patenterteilung: **18.04.2018**
(21) Anmeldenummer: 15729476.0
(22) Anmeldetag: 17.06.2015
(51) Int. Cl.: F03D 1/06

(54) **ROTORBLATT EINER WINDENERGIEANLAGE, EINE WINDENERGIEANLAGE SOWIE EIN VERFAHREN ZUM BETREIBEN EINER WINDENERGIEANLAGE**
WIND TURBINE ROTOR BLADE, WIND TURBINE AND METHOD FOR OPERATING A WIND TURBINE
PALE DE ROTOR D'UNE ÉOLIENNE, ÉOLIENNE AINSI QUE PROCÉDÉ D'ACTIONNEMENT D'UNE ÉOLIENNE

(30) Priorität: 18.06.2014 DE 102014211741
(43) Veröffentlichungstag der Anmeldung: 26.04.2017
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2015/063555
(87) Internationale Veröffentlichungsnummer: WO 2015/193353

(56) Entgegenhaltungen:
- EP-A1- 0 200 823
- EP-A1- 2 162 353
- US-A- 4 335 996
- US-B1- 6 923 622

## Beschreibung

Die vorliegende Erfindung betrifft ein Rotorblatt einer Windenergieanlage, eine Windenergieanlage sowie ein Verfahren zum Betreiben einer Windenergieanlage.

Windenergieanlagen zur Nutzung zur Stromerzeugung sind allgemein bekannt. Dabei ist die mechanische Leistungsaufnahme des Rotors aus dem Wind unter anderem von der Ausgestaltung der Rotorblätter abhängig. Je nach Windverhältnissen ist eine optimale Leistungsaufnahme auch von der Größe der Rotorblattfläche und somit auch von der Länge der Rotorblätter abhängig. Um mehr Energie zu erzeugen sind generell Rotorblätter mit einer großen Länge, durch die der Rotordurchmesser definiert wird, wünschenswert. Der Rotordurchmesser ist in seiner Größe jedoch begrenzt. Bei einem zu großen Rotordurchmesser können bei hohen Windgeschwindigkeiten wie z.B. bei Sturm oder Böen hohe mechanische Lasten an der Windenergieanlage auftreten, die Schäden an dieser herbeiführen können. Daher müssen bei der Auslegung der Rotorblätter solche hohen Windgeschwindigkeiten berücksichtigt werden, was üblicherweise zu einem kleineren Rotordurchmesser und somit zu einer Leistungsabnahme der Windenergieanlage führen kann. Um die Verkleinerung des Rotordurchmessers so gering wie möglich zu halten, sind bereits Steuerungsmaßnahmen bei Sturm wie bspw. die Verstellung des Blattanstellwinkels bekannt.

Weiterhin ist bereits die Idee bekannt, ein ausfahrbares Rotorblatt bereitzustellen. Solche ausfahrbaren Rotorblätter haben den Vorteil, dass sie bei geringen Windgeschwindigkeiten eine große Rotorblattfläche bzw. Rotorblattlänge zur Verfügung stellen können, wohingegen sie bei Sturm, Böen o.ä. eine kleinere Rotorblattfläche zur Verfügung stellen können. Solche ausfahrbaren Rotorblätter sind jedoch derzeit noch kompliziert und schwierig in ihrer Anwendung.

In der prioritätsbegründenden deutschen Patentanmeldung hat das Deutsche Patent- und Markenamt die folgenden Dokumente recherchiert: DE 10 2004 022 730 A1, DE 10 2011 055 370 A1, DE 10 2011 122 504 A1, DE 20 2006 000 673 U1, US 6,923,622 B1, US 2013 / 0 259 697 A1, US 4,710,101 und EP 1 375911 A1.

Der Erfindung liegt somit die Aufgabe zugrunde, wenigstens eines der genannten Probleme zu adressieren. Insbesondere soll eine Lösung geschaffen werden, die einen einfachen Aufbau eines ausfahrbaren Rotorblatts gewährleistet. Zumindest soll eine alternative Lösung vorgeschlagen werden.

Zur Lösung der Aufgabe wird erfindungsgemäß ein Rotorblatt einer Windenergieanlage gemäß Anspruch 1 vorgeschlagen.

Demnach wird ein Rotorblatt einer Windenergieanlage vorgeschlagen, das einen ersten Rotorblattabschnitt und einen zweiten Rotorblattabschnitt umfasst, die gemeinsam eine Gesamtlänge des Rotorblattes bilden. Dabei sind der erste und der zweite Rotorblattabschnitt bei einer Rotation des Rotorblattes durch eine auf das Rotorblatt wirkende Fliehkraft entlang einer Längsachse des Rotorblatts relativ zueinander bewegbar, derart, dass die Gesamtlänge des Rotorblatts veränderbar ist.

Durch die Gesamtlänge des Rotorblatts wird der Rotorblattdurchmesser der Windenergieanlage definiert und damit die vom Wind erfasste Fläche. Durch die relative Bewegung des ersten und des zweiten Rotorblattabschnitts zueinander wird die vom Wind erfasste Fläche verändert. Die Windenergieanlage weist in einem Ruhezustand, also wenn sich die Rotorblätter der Windenergieanlage nicht drehen, eine minimale Gesamtlänge der einzelnen Rotorblätter auf. Setzten sich die Rotorblätter in Bewegung, findet also eine Rotation des jeweiligen Rotorblattes statt, wirkt auf das Rotorblatt eine Fliehkraft. Die vorliegende Erfindung macht sich dabei die Fliehkraft derart zunutze, dass sich der erste und der zweite Rotorblattabschnitt zueinander durch die Fliehkraft bewegen. D.h., dass der zweite Rotorblattabschnitt in Richtung der Längsachse aus und/oder an dem ersten Rotorblattabschnitt von der Rotorblattwurzel weg in Längsrichtung des Rotorblattes bewegt wird. Die Gesamtlänge des Rotorblattes wird dadurch im Gegensatz zu dem Ruhezustand größer und somit auch die vom Wind erfasste Fläche. Alternativ kann auch der erste Rotorblattabschnitt bewegt werden. Durch die Änderung bzw. Anpassung der Gesamtlänge des Rotorblattes kann die Windenergieanlage somit an die vorherrschenden Windgeschwindigkeiten angepasst werden. Die Effizienz einer solchen Windenergieanlage kann somit gesteigert werden. Ein solches Rotorblatt ist zudem vorteilhafterweise dem Grunde nach unabhängig von verschiedenen Leistungs- bzw. Windklassen einsetzbar, also auch übergreifend für mehrere Leistungsklassen. Demnach kann für verschiedene Standorte dasselbe Rotorblatt gefertigt werden, wodurch der Produktionsaufwand reduziert wird. Ein solches Rotorblatt weist dabei insbesondere eine Gesamtlänge von wenigstens 40m auf.

Die relative Bewegung des ersten und des zweiten Rotorblattabschnitts erfolgt dabei durch die bei einer Rotation des Rotorblatts entstehende Fliehkraft. Ein einfacher Aufbau des Rotorblatts bzw. der einzelnen Rotorblattabschnitte ist somit möglich.

Vorzugsweise ist der zweite Rotorblattabschnitt zumindest teilweise in dem ersten Rotorblattabschnitt angeordnet und/oder der erste Rotorblattabschnitt weist eine Öffnung auf, durch die der zweite Rotorblattabschnitt aus dem ersten Rotorblattabschnitt heraus bewegbar ist. Der erste Rotorblattabschnitt ist dabei an der Rotorblattwurzel des Rotorblattes angeordnet. Er gibt insbesondere die Gesamtlänge des Rotorblatts bei einem eingefahrenen zweiten Rotorblattabschnitt vor. Der zweite Rotorblattabschnitt ist dabei in einem eingefahrenen Zustand insbesondere derart in dem ersten Rotorblattabschnitt vorgesehen, dass nur die Rotorblattspitze des zweiten Rotorblattabschnitts aus dem ersten Rotorblattabschnitt herausragt bzw. sich an die äußere Form des ersten Rotorblattabschnitts anpasst, so dass das aerodynamische Verhalten des Rotorblatts nicht gestört wird. Die Öffnung ist dabei insbesondere so vorgesehen, dass der zweite Rotorblattabschnitt durch diese aus dem ersten Rotorblattabschnitt hinaus geführt werden kann. Sie weist daher im Wesentlichen die Form des Profils des zweiten Rotorblattabschnitts auf und/oder entspricht in Etwa der Größe des Profils des zweiten Rotorblattabschnitts. Alternativ kann die Öffnung größer als das Profil des ersten Rotorblattabschnitts ausgebildet sein.

Vorzugsweise ist der zweite Rotorblattabschnitt mit dem ersten Rotorblattabschnitt über eine Seilwindenvorrichtung zum Einfahren des zweiten Rotorblattabschnitts in den ersten Rotorblattabschnitt verbunden. Eine solche Seilwindenvorrichtung weist beispielweise eine Trommel auf, auf der ein Seil, Band, Kabel oder ähnliches aufgerollt wird. Das Aufrollen kann dabei mechanisch, elektrisch oder hydraulisch erfolgen. Die Trommel ist dabei in dem ersten Rotorblattabschnitt angeordnet. Das Seil ist an seinem freien Ende an dem zweiten Rotorblattabschnitt vorgesehen. Dadurch entsteht eine Verbindung zwischen dem ersten und dem zweiten Rotorblattabschnitt. Der zweite Rotorblattabschnitt ist durch die Zugabe von Seil relativ zu dem ersten Rotorblattabschnitt in Richtung der Längsachse des Rotorblatts bewegbar. Wirkt eine Fliehkraft auf den zweiten Rotorblattabschnitt, bewegt sich dieser in Richtung der Längsachse nach außen, also von der Rotorblattwurzel weg. Das Seil wird von der Trommel abgerollt. Der Rotorblattdurchmesser bzw. die Gesamtlänge des Rotorblatts wird vergrößert. Ist der zweite Rotorblattabschnitt ausgefahren und muss er wieder aufgrund hoher Windgeschwindigkeiten eingefahren werden, also wenn der Rotordurchmesser bzw. die Gesamtlänge des Rotorblatts verringert werden muss, wird das Seil eingezogen bzw. auf die Trommel aufgewickelt.

In einer bevorzugten Ausführungsform umfasst die Seilwindenvorrichtung ein Seil zum Befestigen an dem zweiten Rotorblattabschnitt, wobei das Seil aus einer synthetischen Chemiefaser auf der Basis von Polyethylen, insbesondere mit einem ultrahohen Molekulargewicht, hergestellt ist. Ein solches Seil weist dabei insbesondere sehr hohe Zugfestigkeitswerte auf, insbesondere in einem Bereich von 3 bis 4 GPa. Demnach kann ein solches Seil sehr hohe Zuglasten aushalten. Wenn der zweite Rotorblattabschnitt aus dem ersten Rotorblattabschnitt aufgrund der Fliehkraft aus dem ersten Rotorblattabschnitt heraus bewegt wird und dabei das Seil gespannt wird, kann das Seil die auftretende Zugkraft aushalten ohne dabei Schäden davon zu tragen. Zudem weist ein solches Seil eine hohe Beständigkeit gegen Abrieb auf.

Vorzugsweise weist das Rotorblatt eine Messeinrichtung zum Messen der Windgeschwindigkeit auf und/oder die Seilwindenvorrichtung ist derart ausgeführt, dass der zweite Rotorblattabschnitt bei einer vorbestimmten Windgeschwindigkeit eingefahren und/oder ausgefahren wird. Die vorbestimmte Windgeschwindigkeit ist dabei die sogenannte Nenngeschwindigkeit, also die Windgeschwindigkeit, bei der die Windenergieanlage ihre Nennleistung abgibt. Liegt die Windgeschwindigkeit unterhalb der Nenngeschwindigkeit, befindet sich die Windenergieanlage im sogenannten Teillastbereich. Durch das Ausfahren des zweiten Rotorblattabschnitts im Teillastbereich, also bei einer Windgeschwindigkeit unterhalb der vorbestimmten Windgeschwindigkeit, wird die Nenngeschwindigkeit und somit auch die Nennleistung schneller erreicht. Die Windenergieanlage steigert dadurch ihre Effizienz. Übersteigt die Windgeschwindigkeit die Nenngeschwindigkeit, wird die Windenergieanlage üblicherweise zur Vermeidung von Schäden abgeschaltet. Erfindungsgemäß wird bei Überschreitung der Nenngeschwindigkeit der zweite Rotorblattabschnitt eingefahren, so dass sich die vom Wind überstreichende Fläche reduziert. Somit werden Schäden an den Rotorblättern vermieden. Zum Messen der vorherrschenden Windgeschwindigkeit wird dabei eine Messeinrichtung wie beispielsweise ein Hitzedrahtmessgerät, Gondelanemometer oder Flügelradwindmesser verwendet.

In einer bevorzugten Ausführungsform weist der erste Rotorblattabschnitt eine Führungsvorrichtung zum Führen und Lagern des zweiten Rotorblattabschnitts innerhalb des ersten Rotorblattabschnitts auf. Dabei weist die Führungsvorrichtung wenigstens zwei Führungselemente zum Führen des zweiten Rotorblattabschnitts in Richtung der Längsachse des Rotorblatts und wenigstens zwei Federelemente auf, die die wenigstens zwei Führungselemente mit dem ersten Rotorblattabschnitt verbinden. Die Führungsvorrichtung ist dabei insbesondere um den zweiten Rotorblattabschnitt herum angeordnet, sie umschließt den zweiten Rotorblattabschnitt zumindest teilweise. Die Führungselemente und Federelemente sind dabei insbesondere gleichmäßig über die gesamte Länge der Führungsvorrichtung verteilt und/oder auf der Saug- und Druckseite des zweiten Rotorblattabschnitts vorgesehen, so dass der zweite Rotorblattabschnitt gleichmäßig und stabil aus dem ersten Rotorblattabschnitt heraus bzw. in den ersten Rotorblattabschnitt hinein bewegt werden kann. Die Führungselemente sind dabei insbesondere als Schienen oder Rollen ausgeführt, die über die Federelemente in der Führungsvorrichtung aufgehängt sind. Die Federelemente sind beispielsweise als Spiralfedern ausgeführt. Dies hat den Vorteil, dass der zweite Rotorblattabschnitt einfach in dem ersten Rotorblattabschnitt gelagert ist und stabil und sicher geführt wird. Am Rotorblatt auftretende Schwankungen werden durch die Federelemente ausgeglichen.

In einer besonders bevorzugten Ausführungsform sind die Führungselemente als Rollen, insbesondere Kunststoffrollen, ausgestaltet. Solche Kunststoffrollen weisen dabei ein geringes Gewicht auf und sind einfach in der Herstellung.

In einer weiteren bevorzugten Ausführungsform ist die Führungsvorrichtung kastenförmig ausgeführt und in Längsrichtung innerhalb des ersten Rotorblattabschnitts angeordnet. Der zweite Rotorblattabschnitt ist dabei innerhalb der Führungsvorrichtung, also innerhalb des Kastens, vorgesehen. Dadurch wird der zweite Rotorblattabschnitt von im Wesentlichen parallel zueinander angeordneten Wänden des Kastens zumindest teilweise umschlossen. Die Führungselemente und die Federelemente werden gleichmäßig um den zweiten Rotorblattabschnitt angeordnet. Der zweite Rotorblattabschnitt kann somit ausreichend in dem ersten Rotorblattabschnitt geführt und gelagert werden. Die Führungsvorrichtung ist dabei insbesondere Teil des ersten Rotorblattabschnitts, z.B. Teil des Holms. Somit wird kein separates Bauteil benötigt, in dem die Führungselemente und Federelemente vorgesehen sind.

Vorzugsweise beträgt die Länge der Führungsvorrichtung ein Drittel der Länge des aus dem ersten Rotorblattabschnitt heraus bewegten zweiten Rotorblattabschnitts. Die Länge der Führungsvorrichtung bezieht sich dabei auf die Längsachse des Rotorblatts. Die Führungsvorrichtung ist dabei insbesondere um den zweiten Rotorblattabschnitt herum angeordnet. Sie umschließt den zweiten Rotorblattabschnitt somit mit ihrer gesamten Länge. Dadurch wird eine ausreichende Stabilität und Lagerung des zweiten Rotorblattabschnitts auch in einem ausgefahrenen Zustand gewährleistet.

In einer bevorzugten Ausführungsform entspricht die ausfahrbare Länge des zweiten Rotorblattabschnitts etwa einem Zehntel der gesamten Rotorblattlänge. Die ausfahrbare Länge entspricht dabei der Länge des zweiten Rotorblattabschnitts, die aus dem ersten Rotorblattabschnitt heraus ragt, also der maximalen Länge zwischen der Rotorblattspitze des ersten Rotorblattabschnitts bis zur Rotorblattspitze des zweiten Rotorblattabschnitts. Die Länge bezieht sich dabei auf die Längsachse des Rotorblatts. Die Gesamtlänge des Rotorblatts ist demnach um ein Zehntel vergrößerbar. Dadurch wird die Effizienz der Windenergieanlage erhöht.

In einer besonders bevorzugten Ausführungsform weist der erste Rotorblattabschnitt eine erste Rotorblattspitze und der zweite Rotorblattabschnitt eine zweite Rotorblattspitze auf. Dabei sind die Rotorblattspitze des ersten Rotorblattabschnitts und des zweiten Rotorblattabschnitts jeweils als Winglet ausgeführt und/oder die Rotorblattspitze des zweiten Rotorblattabschnitts ist in eine der ersten Rotorblattspitze entgegengesetzte Richtung vorgesehen. Unter einem Winglet ist dabei ein Anbau an den Enden der Rotorblattabschnitte zu verstehen, der in einem vorbestimmten Winkel von der Längsachse des Rotorblatts abweicht.

Die beiden Rotorblattabschnitte weisen jeweils ein sogenanntes Winglet auf, wobei die beiden Winglets in zueinander entgegengesetzten Richtungen vorgesehen sind. Bei einem eingefahrenen zweiten Rotorblattabschnitt wird somit am Ende des Rotorblatts ein Abschluss des Rotorblatts in Form eines Ts bereitgestellt. Dies hat den Vorteil, dass der Widerstand und die Wirbelbildung am Rotorblatt gegenüber herkömmlichen Winglets weiter reduziert werden. Somit kann durch diese Ausführungsform der durch an den Enden der Rotorblätter abfallende Wirbel weiter reduziert werden. Die durch die abfallenden Wirbel erzeugten Geräusche werden somit ebenfalls reduziert. Der Ertrag der Windenergieanlage kann gesteigert werden.

Vorzugsweise weist der zweite Rotorblattabschnitt an einem der Rotorblattspitze entgegengesetzten Ende einen Anschlag zum Gewährleisten einer vorbestimmten ausfahrbaren Länge auf. Der Anschlag kann beispielsweise in Form einer umlaufenden Kante am Ende des Profils des zweiten Rotorblattabschnitts ausgeführt sein. Diese Kante bzw. der Anschlag schlägt gegen die Führungsvorrichtung, wodurch ein weiteres Ausfahren des zweiten Rotorblattabschnitts aus dem ersten Rotorblattabschnitt verhindert wird.

In einer bevorzugten Ausführungsform weist der zweite Rotorblattabschnitt über seine gesamte Länge eine im Wesentlichen konstante Profiltiefe auf. Dabei weist der zweite Rotorblattabschnitt im Wesentlichen keine Verwindung auf. Dies hat den Vorteil, dass der zweite Rotorblattabschnitt gleichmäßig aus dem ersten Rotorblattabschnitt heraus geführt werden kann.

Vorzugsweise ist der erste und/oder zweite Rotorblattabschnitt im Wesentlichen aus einem Faserverbundwerkstoff und/oder Holz hergestellt und die erste und/oder zweite Rotorblattspitze aus einem leitenden Material, insbesondere Aluminium. Dies hat den Vorteil, dass der erste und/oder zweite Rotorblattabschnitt in einer Leichtbauweise aus einem herkömmlichen Material wie Faserverbundwerkstoffen oder Balsa-Holz hergestellt werden kann und somit Gewicht eingespart wird. Ein Blitzeinschlag an der Rotorblattspitze kann dabei trotzdem abgeleitet werden, ohne dass das Rotorblatt zerstört wird.

In einer besonders bevorzugten Ausführungsform ist der erste und/oder der zweite Rotorblattabschnitt über eine Metallschiene und/oder ein Metallseil an eine Blitzschutzeinrichtung angeschlossen. Dadurch können Blitzeinschläge in das Rotorblatt abgeleitet werden.

Weiterhin wird zur Lösung der Aufgabe eine Windenergieanlage mit wenigstens einem Rotorblatt nach einem der vorstehenden Ausführungsformen vorgeschlagen. Eine solche Windenergieanlage weist dabei vorteilhafterweise drei solcher Rotorblätter auf. Die Rotorblätter bilden gemeinsam den Rotordurchmesser, der je nach Windverhältnissen veränderbar ist. Durch die Verwendung der erfindungsgemäßen Rotorblätter kann somit die Effizienz der Windenergieanlage durch eine einfache Bauweise gesteigert werden. Die Nennleistung einer solchen Windenergieanlage beträgt dabei insbesondere einen Wert von wenigstens 2000kW, vorzugsweise liegt sie in einem Bereich zwischen 2000kW und 3050kW.

Ferner wird ein Verfahren zum Betreiben einer Windenergieanlage mit wenigstens einem Rotorblatt mit einem ersten Rotorblattabschnitt und einem zweiten Rotorblattabschnitt vorgeschlagen. Dabei werden bei einer Rotation des Rotorblatts der erste und der zweite Rotorblattabschnitt durch eine auftretende Fliehkraft relativ zueinander bewegt. Die vorliegende Erfindung macht sich dabei diese Fliehkraft derart zunutze, dass sich der erste und der zweite Rotorblattabschnitt zueinander durch die Fliehkraft bewegen. D.h., dass der zweite Rotorblattabschnitt in Richtung der Längsachse aus und/oder an dem ersten Rotorblattabschnitt von der Rotorblattwurzel weg in Längsrichtung des Rotorblattes bewegt wird, die Gesamtlänge des Rotorblattes wird dadurch im Gegensatz zu dem Ruhezustand größer und somit die vom Wind erfasste Fläche. Die Effizienz der Windenergieanlage wird durch die an dem Rotorblatt bei einer Rotation ohnehin auftretenden Fliehkraft gesteigert.

Vorzugsweise wird der zweite Rotorblattabschnitt in dem ersten Rotorblattabschnitt angeordnet und der zweite Rotorblattabschnitt aus dem ersten Rotorblattabschnitt durch die am Rotorblatt auftretende Fliehkraft aus dem ersten Rotorblattabschnitt heraus bewegt, so dass die vom Wind erfasste Fläche des Rotorblatts vergrößert wird. Der zweite Rotorblattabschnitt wird dabei insbesondere aus dem ersten Rotorblattabschnitt heraus geführt bzw. herausgefahren. Dafür ist in dem ersten Rotorblattabschnitt eine Führungsvorrichtung vorgesehen, die den zweiten Rotorblattabschnitt sicher und stabil aus dem ersten Rotorblattabschnitt herausführt.

In einer bevorzugten Ausführungsform wird der zweite Rotorblattabschnitt über eine Seilwindenvorrichtung in den ersten Rotorblattabschnitt zurückbewegt, so dass die vom Wind erfasste Fläche des Rotorblatts gegenüber der vom Wind erfassten Fläche bei einem vollständig ausgefahrenen zweiten Rotorblattabschnitt verkleinert wird. Dadurch kann die vom Wind erfasste Fläche gezielt verkleinert werden um bei hohen Windgeschwindigkeiten eine Schädigung des Rotorblattes zu vermeiden.

In einer besonders bevorzugten Ausführungsform wird der zweite Rotorblattabschnitt bei schwachem Wind, insbesondere im Teillastbereich, ausgefahren. Liegt die Windgeschwindigkeit unterhalb der Nenngeschwindigkeit, befindet sich die Windenergieanlage im sogenannten Teillastbereich. Durch das Ausfahren des zweiten Rotorblattabschnitts im Teillastbereich, also bei einer geringen Windgeschwindigkeit, wird die Nenngeschwindigkeit und somit auch die Nennleistung schneller erreicht. Die Windenergieanlage steigert dadurch ihre Effizienz.

Nachfolgend wird die Erfindung anhand von Ausführungsbeispielen unter Bezugnahme auf die begleitenden Figuren beispielhaft erläutert. Die Figuren enthalten dabei teilweise vereinfachte, schematische Darstellungen.
- Figur 1: zeigt eine Windenergieanlage in einer perspektivischen Ansicht.
- Figur 2: zeigt ein Rotorblatt in einer Seitenansicht.
- Figur 3: zeigt das Rotorblatt der Figur 2 in einer weiteren Seitenansicht.
- Figur 4: zeigt einen Ausschnitt des Rotorblatts aus Figur 3 in einem ausgefahrenen Zustand in einer Seitenansicht.
- Figur 5: zeigt einen Ausschnitt des Rotorblatts der Figur 2 in einem ausgefahrenen Zustand in einer weiteren Seitenansicht.
- Figur 6: zeigt eine Schnittansicht des Rotorblatts aus Figur 5.

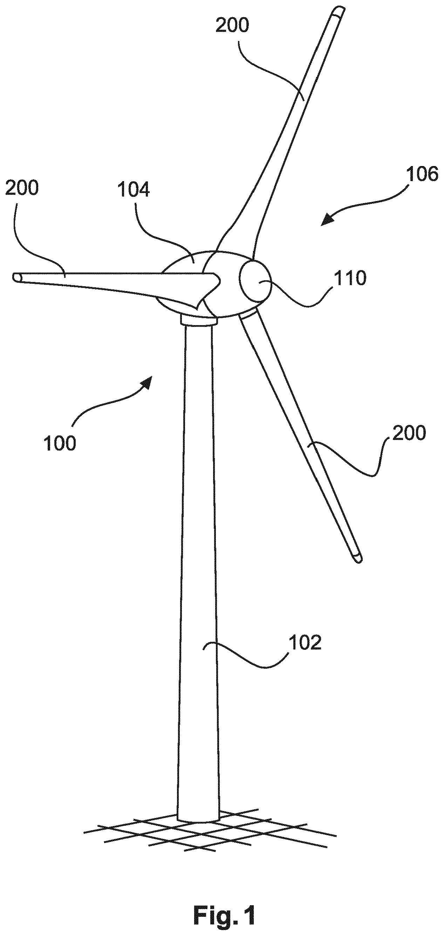

Figur 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an.

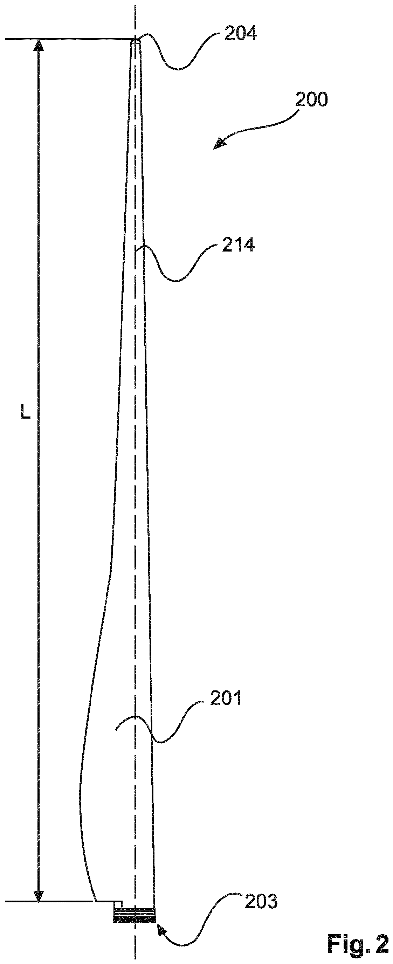

Figur 2 zeigt eine Seitenansicht eines Rotorblattes 200 einer Ausführungsform über seine gesamte Länge L. Das Rotorblatt 200 weist einen ersten Rotorblattabschnitt 201 auf sowie einen zweiten Rotorblattabschnitt (nicht dargestellt). Zudem weist das Rotorblatt 200 an einem Ende eine Rotorblattwurzel 203 und an dem dazu abgewandten Ende eine Rotorblattspitze 204 auf. Weiterhin ist eine Längsachse 214 des Rotorblatts 200 zu erkennen.

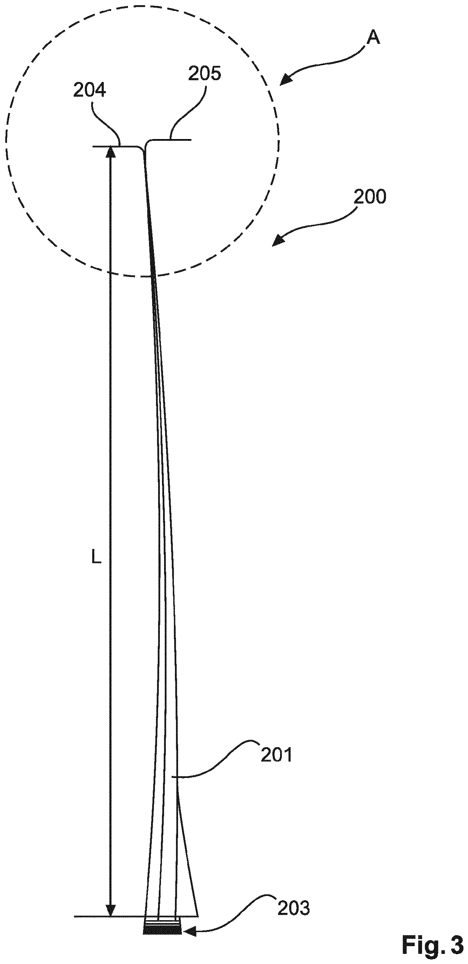

Figur 3 zeigt eine weitere Seitenansicht des Rotorblatts 200 der Figur 2. Der zweite Rotorblattabschnitt ist nicht aus dem ersten Rotorblattabschnitt 201 heraus bewegt. Das Rotorblatt 200 weist somit seine minimale Gesamtlänge L auf. Es ist das Rotorblatt 200 mit dem ersten Rotorblattabschnitt 201 mit der ersten Rotorblattspitze 204 sowie der zweiten Rotorblattspitze 205 des zweiten Rotorblattabschnittes zu erkennen. Die erste Rotorblattspitze 204 und die zweite Rotorblattspitze 205 sind dabei als ein sogenanntes Winglet ausgeführt. Sie führen also nicht gerade in Richtung der Längsachse 214 bis zur Rotorblattspitze weiter, sondern sind in einer von der Längsachse 214 des Rotorblattes 200 abweichenden Richtung vorgesehen. Dadurch werden die Randwirbel am Ende des Rotorblattes verringert, das Geräusch der Windenergieanlage wird reduziert. Die erste Rotorblattspitze 204 und die zweite Rotorblattspitze 205 weisen in verschiedene Richtungen. Dadurch entsteht eine sogenannte T-Rotorblattspitze.

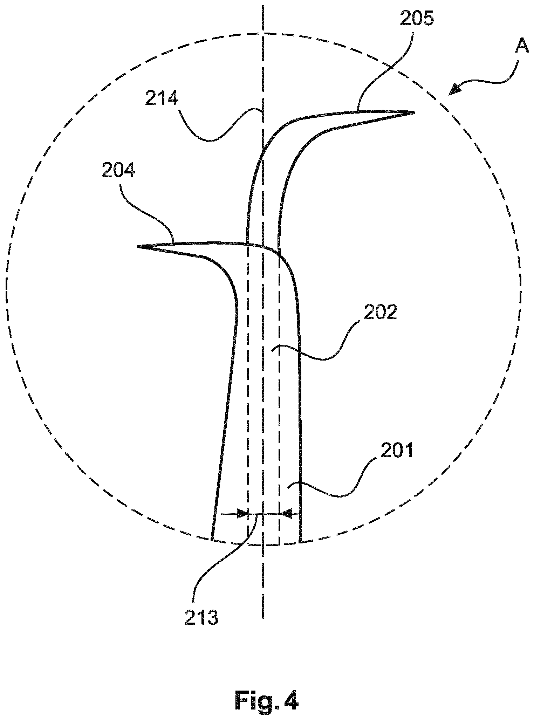

Figur 4 zeigt einen vergrößerten Ausschnitt des Rotorblatts 200 aus Figur 3. Darin ist zu erkennen, dass der zweite Rotorblattabschnitt 202 innerhalb des ersten Rotorblattabschnitts 201 angeordnet ist. Der zweite Rotorblattabschnitt 202 ist aus dem ersten Rotorblattabschnitt heraus bewegt. Ferner ist die Profiltiefe 213 des zweiten Rotorblattabschnitts 202 im Wesentlichen konstant ausgeführt. Ein sicheres Ein- und Ausfahren des zweiten Rotorblattabschnitts 202 aus dem ersten Rotorblattabschnitt 201 ist somit gewährleistet.

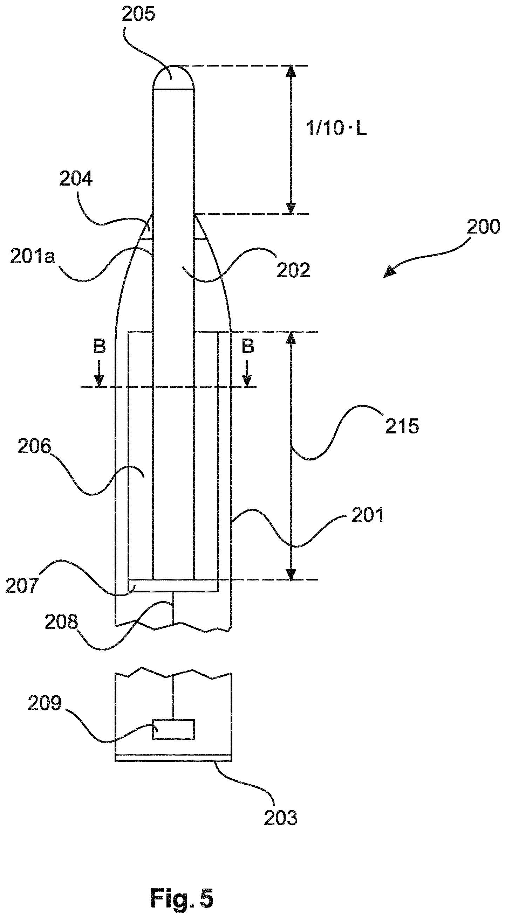

Figur 5 zeigt einen vergrößerten Ausschnitt des Rotorblatts 200 aus Figur 2, wobei der zweite Rotorblattabschnitt 202 aus dem ersten Rotorblattabschnitt 201 herausragt. Der zweite Rotorblattabschnitt 202 weist zumindest bis zur zweiten Rotorblattspitze 205 eine konstante Profiltiefe, also eine konstante Größe zwischen der Nase und der Hinterkante, bzw. eine konstante Kontur auf. Dadurch wird ein problemloses hinaus- bzw. hineingleiten des zweiten Rotorblattabschnitts 202 aus bzw. in eine in dem ersten Rotorblattabschnitt 201 entsprechend vorgesehene Öffnung 201 a gewährleistet.

Der erste Rotorblattabschnitt 201 weist eine Seilwindenvorrichtung 209 sowie ein damit verbundenes Seil 208 auf, welches mit der Seilwindenvorrichtung 209 und dem zweiten Rotorblattabschnitt 202 verbunden ist. Das Seil 208 ist dabei beispielsweise als ein Seil aus einer synthetischen Chemiefaser auf der Basis von Polyethylen ausgeführt. Der zweite Rotorblattabschnitt 202 weist einen Anschlag 207 auf, der bei einer maximal ausgefahrenen Länge an dem Kasten 206 anschlägt. Durch den Anschlag 207 wird verhindert, dass der zweite Rotorblattabschnitt 202 zu weit aus dem ersten Rotorblattabschnitt 201 herausragt. In Figur 5 ist die maximale Länge, die der zweite Rotorblattabschnitt 202 aus dem ersten Rotorblattabschnitt 201 herausragen kann, gleich ein Zehntel der Gesamtlänge L des Rotorblatts 200. Der Kasten 206 weist dabei eine Länge 215 von einem Drittel der herausragenden Länge des zweiten Rotorblattabschnitts 202 auf.

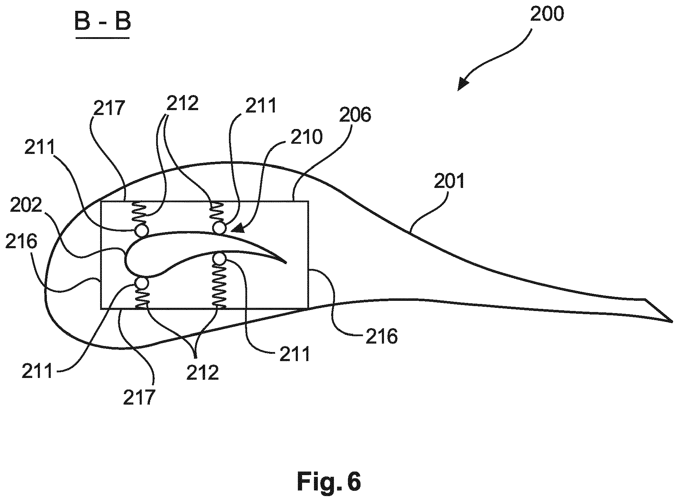

Figur 6 zeigt eine Schnittansicht B-B des Rotorblatts 200 der Figur 5. In Figur 6 ist zu erkennen, dass der zweite Rotorblattabschnitt 202 innerhalb des in dem ersten Rotorblattabschnitt 201 angeordneten Kasten 206 vorgesehen ist. Der Kasten 206 ist Teil einer Führungsvorrichtung 210, durch die der zweite Rotorblattabschnitt 202 aus dem ersten Rotorblattabschnitt 201 hinaus- und wieder hereingeführt wird. Die Führungsvorrichtung 210 umfasst dabei mehrere Rollen 211 sowie mehrere Federelemente 212, von denen jeweils vier in Figur 6 abgebildet sind. Solche Rollen 211 und Federelemente 212 sind dabei vorzugsweise über die gesamte Länge des Kastens 206 verteilt. Durch die Federelemente 212 sind die Rollen 211 dazu geeignet, sich der Kontur des zweiten Rotorblattabschnitts 202 anzupassen. Die Federn 212 weisen eine vorbestimmte Federsteifigkeit auf, durch die sichergestellt wird, dass der zweite Rotorblattabschnitt 202 in einer vorbestimmten Position gehalten wird und dadurch eine Bewegung in Längsrichtung möglich wird.

Der Kasten 206 ist dabei ebenfalls Teil der Struktur des ersten Rotorblattabschnitts 201. Der Kasten 206 wird dabei aus zwei im Wesentlichen parallel zueinander angeordneten Querwänden 217 und zwei im Wesentlichen zueinander angeordneten Seitenwänden 216 gebildet. An den Querwänden 217 sind jeweils zwei Federn 212 und zwei Rollen 211 vorgesehen, die den zweiten Rotorblattabschnitt 202 führen und innerhalb des ersten Rotorblattabschnitts 201 lagern.

## Patentansprüche

1. Windenergieanlagen-Rotorblatt (200), umfassend:
- einen ersten Rotorblattabschnitt (201) und
- einen zweiten Rotorblattabschnitt (202),
wobei der erste und der zweite Rotorblattabschnitt (201, 202) eine Gesamtlänge (L) des Rotorblatts (200) bilden, und
wobei bei einer Rotation des Rotorblatts (200) der erste Rotorblattabschnitt (201) und der zweite Rotorblattabschnitt (202) durch eine auf das Rotorblatt (200) wirkende Fliehkraft entlang einer Längsachse (214) des Rotorblatts (200) relativ zueinander bewegbar sind, derart, dass die Gesamtlänge (L) des Rotorblatts (200) veränderbar ist,
wobei der zweite Rotorblattabschnitt (202) zumindest teilweise in dem ersten Rotorblattabschnitt (201) angeordnet ist und/oder der erste Rotorblattabschnitt (201) eine Öffnung (201 a) aufweist, durch die der zweite Rotorblattabschnitt (202) aus dem ersten Rotorblattabschnitt (201) heraus bewegbar ist,
wobei der erste Rotorblattabschnitt (201) eine Führungsvorrichtung (210) zum Führen und Lagern des zweiten Rotorblattabschnitts (202) innerhalb des ersten Rotorblattabschnitts (201) aufweist, wobei die Führungsvorrichtung (210) wenigstens zwei Führungselemente (211) zum Führen des zweiten Rotorblattabschnitts (202) in Richtung der Längsachse (214) des Rotorblatts (200) und wenigstens zwei Federelemente (212) aufweist, die die wenigstens zwei Führungselemente mit dem ersten Rotorblattabschnitt (201) verbinden.

2. Rotorblatt nach Anspruch 1, **dadurch gekennzeichnet, dass** der zweite Rotorblattabschnitt (202) mit dem ersten Rotorblattabschnitt (201) über eine Seilwindenvorrichtung (209) zum Einfahren des zweiten Rotorblattabschnitts (202) in den ersten Rotorblattabschnitt (201) verbunden ist.

3. Rotorblatt nach Anspruch 2,
**dadurch gekennzeichnet, dass** die Seilwindenvorrichtung (209) ein Seil (208) zum Befestigen an dem zweiten Rotorblattabschnitt (202) umfasst, wobei das Seil (208) aus einer synthetischen Chemiefaser auf der Basis von Polyethylen hergestellt ist.

4. Rotorblatt nach einem der Ansprüche 2 oder 3,
**dadurch gekennzeichnet, dass** das Rotorblatt (200) eine Messeinrichtung zum Messen der Windgeschwindigkeit aufweist und/oder die Seilwindenvorrichtung (209) derart ausgeführt ist, dass bei einer vorbestimmten Windgeschwindigkeit der zweite Rotorblattabschnitt (202) eingefahren und/oder ausgefahren wird.

5. Rotorblatt nach Anspruch 1,
**dadurch gekennzeichnet, dass** die Führungselemente (211) als Rollen, insbesondere Kunststoffrollen, ausgestaltet sind.

6. Rotorblatt nach einem der Ansprüche 1 oder 5,
**dadurch gekennzeichnet, dass** die Führungsvorrichtung (210) kastenförmig ausgeführt ist und in Richtung der Längsachse (214) innerhalb des ersten Rotorblattabschnitts (201) angeordnet ist.

7. Rotorblatt nach einem der Ansprüche 5 oder 6,
**dadurch gekennzeichnet, dass** die Länge der Führungsvorrichtung (210) ein Drittel der Länge des aus dem ersten Rotorblattabschnitt (201) heraus bewegten zweiten Rotorblattabschnitts (202) beträgt.

8. Rotorblatt nach einem der Ansprüche 2 bis 7,
**dadurch gekennzeichnet, dass** die ausfahrbare Länge des zweiten Rotorblattabschnitts (202) etwa einem Zehntel der Gesamtlänge (L) des Rotorblatts (200) entspricht.

9. Rotorblatt nach einem der vorstehenden Ansprüche,
**dadurch gekennzeichnet, dass** der erste Rotorblattabschnitt (201) eine erste Rotorblattspitze (204) und der zweite Rotorblattabschnitt (202) eine zweite Rotorblattspitze (205) aufweist, wobei die erste Rotorblattspitze (204) und die zweite Rotorblattspitze (205) jeweils als Winglets ausgeführt sind und/oder die zweite Rotorblattspitze (205) in eine der ersten Rotorblattspitze (204) entgegengesetzten Richtung vorgesehen ist.

10. Rotorblatt nach einem der Ansprüche 1 bis 9,
**dadurch gekennzeichnet, dass** der zweite Rotorblattabschnitt (202) an einem der zweiten Rotorblattspitze (205) in Längsrichtung (214) entgegengesetzten Ende einen Anschlag zum Gewährleisten einer vorbestimmten ausfahrbaren Länge aufweist.

11. Rotorblatt nach einem der vorstehenden Ansprüche,
**dadurch gekennzeichnet, dass** der zweite Rotorblattabschnitt (202) über seine gesamte Länge eine im Wesentlichen konstante Profiltiefe aufweist.

12. Rotorblatt nach einem der vorstehenden Ansprüche,
**dadurch gekennzeichnet, dass** der erste und/oder zweite Rotorblattabschnitt (201, 202) im Wesentlichen aus einem Faserverbundwerkstoff und/oder Holz hergestellt ist und die erste und/oder zweite Rotorblattspitze (204, 205) aus einem leitenden Material, insbesondere Aluminium, hergestellt ist.

13. Rotorblatt nach einem der vorstehenden Ansprüche,
**dadurch gekennzeichnet, dass** der erste und/oder zweite Rotorblattabschnitt (201, 202) über eine Metallschiene und/oder ein Metallseil an eine Blitzschutzeinrichtung angeschlossen ist.

14. Windenergieanlage mit wenigstens einem Rotorblatt nach einem der vorstehenden Ansprüche.

15. Verfahren zum Betreiben einer Windenergieanlage mit wenigstens einem Rotorblatt (200) mit einem ersten Rotorblattabschnitt (201) und einem zweiten Rotorblattabschnitt (202),
wobei bei einer Rotation des Rotorblatts (200) der erste und der zweite Rotorblattabschnitt (201, 202) durch eine auftretende Fliehkraft relativ zueinander bewegt werden,
wobei der zweite Rotorblattabschnitt (202) in dem ersten Rotorblattabschnitt (201) angeordnet wird, und
der zweite Rotorblattabschnitt (202) aus dem ersten Rotorblattabschnitt (201) durch die am Rotorblatt (200) auftretende Fliehkraft aus dem ersten Rotorblattabschnitt (201) heraus bewegt wird, so dass die vom Wind erfasste Fläche des Rotorblatts (200) vergrößert wird,
wobei der erste Rotorblattabschnitt (201) eine Führungsvorrichtung (210) zum Führen und Lagern des zweiten Rotorblattabschnitts (202) innerhalb des ersten Rotorblattabschnitts (201) aufweist, wobei die Führungsvorrichtung (210) wenigstens zwei Führungselemente (211) zum Führen des zweiten Rotorblattabschnitts (202) in Richtung der Längsachse (214) des Rotorblatts (200) und wenigstens zwei Federelemente (212) aufweist, die die wenigstens zwei Führungselemente mit dem ersten Rotorblattabschnitt (201) verbinden.

## Claims

1. Wind-turbine rotor blade (200), comprising:
- a first rotor-blade portion (201) and
- a second rotor-blade portion (202),
the first and the second rotor-blade portion (201, 202) constituting a total length (L) of the rotor blade (200), and,
upon a rotation of the rotor blade (200), the first rotor-blade portion (201) and the second rotor-blade portion (202) can be moved relative to each other, along a longitudinal axis (214) of the rotor blade (200), as a result of a centrifugal force acting upon the rotor blade (200), in such a way that the total length (L) of the rotor blade (200) can be altered,
wherein the second rotor-blade portion (202) is disposed, at least partially, in the first rotor-blade portion (201), and/or the first rotor-blade portion (201) has an opening (201a), through which the second rotor-blade portion (202) can be moved out of the first rotor-blade portion (201),
wherein the first rotor-blade portion (201) has a guide device (210), for guiding and supporting the second rotor-blade portion (202) inside the first rotor-blade portion (201), the guide device (210) having at least to guide elements (211), for guiding the second rotor-blade portion (202)in the direction of the longitudinal axis (214) of the rotor blade (200), and at least two spring elements (212), which connect the at least two guide elements to the first rotor-blade portion (201).

2. Rotor blade according to Claim 1, **characterized in that** the second rotor-blade portion (202) is connected to the first rotor-blade portion (201) by means of a rope winch device (209) for retracting the second rotor-blade portion (202) into the first rotor-blade portion (201).

3. Rotor blade according to Claim 2, **characterized in that** the rope winch device (209) comprises a rope (208) for fastening to the second rotor-blade portion (202), the rope (208) being made of a synthetic, polyethylene-based chemical fibre.

4. Rotor blade according to any one of Claims 2 or 3, **characterized in that** the rotor blade (200) has a measuring means for measuring the wind speed, and/or the rope winch device (209) is realized in such a manner that the second rotor-blade portion (202) is retracted and/or extended in the case of a predefined wind speed.

5. Rotor blade according to Claim 4, **characterized in that** the guide elements (211) are designed as rollers, in particular plastic rollers.

6. Rotor blade according to either one of Claims 4 or 5, **characterized in that** the guide device (210) is realized in the shape of a box and is disposed, in the direction of the longitudinal axis (214), inside the first rotor-blade portion (201).

7. Rotor blade according to any one of Claims 4 to 6, **characterized in that** the length of the guide device (210) is one third of the length of the second rotor-blade portion (202) moved out of the first rotor-blade portion (201).

8. Rotor blade according to any one of Claims 2 to 7, **characterized in that** the extendable length of the second rotor-blade portion (202) corresponds approximately to one tenth of the total length (L) of the rotor blade (200).

9. Rotor blade according to any one of the preceding claims, **characterized in that** the first rotor-blade portion (201) has a first rotor-blade tip (204), and the second rotor-blade portion (202) has a second rotor-blade tip (205), the first rotor-blade tip (204) and the second rotor-blade tip (205) each being realized as winglets, and/or the second rotor-blade tip (205) being provided in an opposite direction to the first rotor-blade tip (204).

10. Rotor blade according to any one of Claims 2 to 9, **characterized in that** the second rotor-blade portion (202) has a stop, at an end opposite to the rotor-blade tip (205) in the longitudinal direction (214), for ensuring a predefined extendable length.

11. Rotor blade according to any one of the preceding claims, **characterized in that** the second rotor-blade portion (202) has a substantially constant profile depth over its entire length.

12. Rotor blade according to any one of the preceding claims, **characterized in that** the first and/or second rotor-blade portion (201, 202) is produced substantially from a fibrous composite material and/or wood, and the first and/or second rotor-blade tip (204, 205) is produced from a conductive material, in particular aluminium.

13. Rotor blade according to any one of the preceding claims, **characterized in that** the first and or the second rotor-blade portion (201, 202) is connected to a lightning protection means by means of a metal rail and/or a metal cable.

14. Wind turbine having at least one rotor blade according to any one of the preceding claims.

15. Method for operating a wind turbine having at least one rotor blade (200) that has a first rotor-blade portion (201) and a second rotor-blade portion (202), the first and the second rotor-blade portion (201, 202) being moved relative to each other as a result of an occurring centrifugal force, upon a rotation of the rotor blade,
wherein the second rotor-blade portion (202) being disposed in the first rotor-blade portion (201), and the second rotor-blade portion (202) being moved out of the first rotor-blade portion (201) as a result of the centrifugal force occurring on the rotor blade (200) out of the first rotor-blade portion (201), such that the surface area of the rotor blade (200) acted upon by the wind is enlarged,
wherein the first rotor-blade portion (201) has a guide device (210), for guiding and supporting the second rotor-blade portion (202) inside the first rotor-blade portion (201), the guide device (210) having at least to guide elements (211), for guiding the second rotor-blade portion (202)in the direction of the longitudinal axis (214) of the rotor blade (200), and at least two spring elements (212), which connect the at least two guide elements to the first rotor-blade portion (201).

## Revendications

1. Pale de rotor d'éolienne (200), comprenant :
- une première section de pale de rotor (201) et
- une deuxième section de pale de rotor (202),
dans laquelle la première et la deuxième section de pale de rotor (201, 202) forment une longueur totale (L) de la pale de rotor (200), et
dans laquelle, lors d'une rotation de la pale de rotor (200), la première section de pale de rotor (201) et la deuxième section de pale de rotor (202) peuvent être déplacées l'une par rapport à l'autre le long d'un axe longitudinal (214) de la pale de rotor (200) par une force centrifuge agissant sur la pale de rotor (200), de telle sorte que la longueur totale (L) de la pale de rotor (200) est modifiable,
dans laquelle la deuxième section de pale de rotor (202) est disposée au moins en partie dans la première section de pale de rotor (201) et/ou la première section de pale de rotor (201) présente une ouverture (201 a), par laquelle la deuxième section de pale de rotor (202) peut être sortie de la première section de pale de rotor (201),
dans laquelle la première section de pale de rotor (201) présente un dispositif de guidage (210) pour le guidage et le logement de la deuxième section de pale de rotor (202) à l'intérieur de la première section de pale de rotor (201), dans laquelle le dispositif de guidage (210) présente au moins deux éléments de guidage (211) pour le guidage de la deuxième section de pale de rotor (202) en direction de l'axe longitudinal (214) de la pale de rotor (200) et au moins deux éléments ressort (212), qui relient les au moins deux éléments de guidage à la première section de pale de rotor (201).

2. Pale de rotor selon la revendication 1, **caractérisée en ce que** la deuxième section de pale de rotor (202) est reliée à la première section de pale de rotor (201) par le biais d'un dispositif de treuil (209) pour rentrer la deuxième section de pale de rotor (202) dans la première section de pale de rotor (201).

3. Pale de rotor selon la revendication 2,
**caractérisée en ce que** le dispositif de treuil (209) comprend un câble (208) pour la fixation à la deuxième section de pale de rotor (202), dans laquelle le câble (208) est fabriqué en une fibre chimique synthétique à base de polyéthylène.

4. Pale de rotor selon l'une quelconque des revendications 2 ou 3,
**caractérisée en ce que** la pale de rotor (200) présente un dispositif de mesure pour la mesure de la vitesse du vent et/ou le dispositif de treuil (209) est réalisé de telle sorte que, pour une vitesse de vent prédéterminée, la deuxième section de pale de rotor (202) est rentrée et/ou déployée.

5. Pale de rotor selon la revendication 1,
**caractérisée en ce que** les éléments de guidage (211) sont configurés en tant que galets, en particulier galets plastiques.

6. Pale de rotor selon l'une quelconque des revendications 1 ou 5,
**caractérisée en ce que** le dispositif de guidage (210) est réalisé en forme de caisson et est disposé en direction de l'axe longitudinal (214) à l'intérieur de la première section de pale de rotor (201).

7. Pale de rotor selon l'une quelconque des revendications 5 ou 6,
**caractérisée en ce que** la longueur du dispositif de guidage (210) est un tiers de la longueur de la deuxième section de pale de rotor (202) sortie de la première section de pale de rotor (201).

8. Pale de rotor selon l'une quelconque des revendications 2 à 7,
**caractérisée en ce que** la longueur déployable de la deuxième section de pale de rotor (202) correspond à environ un dixième de la longueur totale (L) de la pale de rotor (200).

9. Pale de rotor selon l'une quelconque des revendications précédentes,
**caractérisée en ce que** la première section de pale de rotor (201) présente une première pointe de pale de rotor (204) et la deuxième section de pale de rotor (202) présente une deuxième pointe de pale de rotor (205), dans laquelle la première pointe de pale de rotor (204) et la deuxième pointe de pale de rotor (205) sont réalisées respectivement en tant qu'ailettes et/ou la deuxième pointe de pale de rotor (205) est prévue dans une direction opposée à la première pointe de pale de rotor (204).

10. Pale de rotor selon l'une quelconque des revendications 1 à 9,
**caractérisée en ce que** la deuxième section de pale de rotor (202) présente, à une extrémité opposée à la deuxième pointe de pale de rotor (205) en direction longitudinale (214), une butée pour garantir une longueur déployable prédéterminée.

11. Pale de rotor selon l'une quelconque des revendications précédentes,
**caractérisée en ce que** la deuxième section de pale de rotor (202) présente une profondeur de profil sensiblement constante sur toute sa longueur.

12. Pale de rotor selon l'une quelconque des revendications précédentes,
**caractérisée en ce que** la première et/ou deuxième section de pale de rotor (201, 202) est fabriquée sensiblement en un matériau composite de fibres et/ou en bois et la première et/ou deuxième pointe de pale de rotor (204, 205) est fabriquée en un matériau conducteur, en particulier en aluminium.

13. Pale de rotor selon l'une quelconque des revendications précédentes,
**caractérisée en ce que** la première et/ou deuxième section de pale de rotor (201, 202) est raccordée via un rail métallique et/ou un câble métallique à un dispositif de protection contre la foudre.

14. Éolienne avec au moins une pale de rotor selon l'une quelconque des revendications précédentes.

15. Procédé d'actionnement d'une éolienne avec au moins une pale de rotor (200) avec une première section de pale de rotor (201) et une deuxième section de pale de rotor (202),
dans lequel, lors d'une rotation de la pale de rotor (200), la première et la deuxième section de pale de rotor (201, 202) sont déplacées l'une par rapport à l'autre par une force centrifuge apparaissant,
dans lequel la deuxième section de pale de rotor (202) est disposée dans la première section de pale de rotor (201), et
la deuxième section de pale de rotor (202) est sortie de la première section de pale de rotor (201) par la force centrifuge apparaissant au niveau de la pale de rotor (200) de la première section de pale de rotor (201), si bien que la surface de la pale de rotor (200) happée par le vent est augmentée,
dans lequel la première section de pale de rotor (201) présente un dispositif de guidage (210) pour le guidage et le logement de la deuxième section de pale de rotor (202) à l'intérieur de la première section de pale de rotor (201), dans lequel le dispositif de guidage (210) présente au moins deux éléments de guidage (211) pour le guidage de la deuxième section de pale de rotor (202) en direction de l'axe longitudinal (214) de la pale de rotor (200) et au moins deux éléments ressort (212), qui relient les au moins deux éléments de guidage à la première section de pale de rotor (201).
